# EUROPEAN PATENT SPECIFICATION

(11) **EP 0 510 743 B1**
(45) Date of publication and mention of the grant of the patent: **04.08.1999**
(21) Application number: 92200835.4
(22) Date of filing: 23.03.1992
(51) Int. Cl.: C08G 63/692, C08G 63/682, C08G 63/91, C08J 9/00, C08G 18/46, C07C 69/80, C07F 9/53

(54) **A flame-retardant composition**
Flammhemmende Zusammensetzung
Composition retardant la flamme

(30) Priority: 27.03.1991 GB 9106505
(43) Date of publication of application: 28.10.1992
(73) Proprietor: SHELL INTERNATIONALE RESEARCH MAATSCHAPPIJ B.V., 2596 HR Den Haag (NL)
(72) Inventor: Schendzielorz, Michael Christoph, B-1348 Ottignies, Louvain-la-Neuve (BE); Slabbinck, Marijke Daniel Florida, B-1348 Ottignies, Louvain-la-Neuve (BE)

(56) References cited:
- EP-A- 0 066 171
- EP-A- 0 070 573
- DE-A- 1 923 937
- DE-C- 1 170 636
- GB-A- 1 023 387
- CHEMICAL ABSTRACTS, vol. 108, no. 24, 13 June 1988, Columbus, Ohio, US; abstract no. 206231h, & JP-A-62 289 671 (KAO) 16 December 1987

## Description

The present invention relates to a flame-retardant composition useful in rendering polymers flame-retardant by copolymerizing with the starting monomers. Moreover, the invention relates to polymer compositions which are rendered flame-retardant by having added an effective amount of an flame-retardant composition to the reaction mixture at the time that the polymer is prepared, as well as to polymer articles containing polymer compositions which are rendered flame-retardant in accordance with the present invention.

Since polymers are used more and more in day-to-day appliances, fire requirements have become more stringent. As a result, the interest in compounds or compositions that render said appliances (i.e., the polymers which have been used to make the same) more flame-retardant has increased.

German Offenlegungsschrift No. 1923937 discloses ester-containing polyols with flame resistant properties resulting from incorporating into the polyol chain, phosphorus from acids or (unsubstituted) oxides, a halogen-containing acid anhydride, and an alkylene oxide to reduce the resulting polyol acid number.

To render polyurethane foam (suitable for i.a. insulation purposes) more flame-retardant, US Patent Specification No. 4,343,914 teaches to add an effective amount of a certain polyhydroxyphosphonic compound, i.e., an alkyl bis(3-hydroxypropyl)phosphine-oxide to the resin composition prior to the reaction of the polyol with the diisocyanate. Under these conditions, the polyhydroxyphosphonic compound reacts with the diisocyanate and becomes a part of the polyurethane chain. The merits that according to said US reference may be attributed to the polyhydroxyphosphonic compound include non-corrosiveness, high ultraviolet stability, non-toxicity and minimal adverse change in the physical properties of the polyurethane. In order to render the prepared polyurethane foam even more flame-retardant, said polyhydroxyphosphonic compound is advantageously used in combination with an halogenated organic compound.

European Patent Specification No. 66171 A proposes the use of such phosphine oxides, with or without a halogen-containing compound, in rendering epoxy resins flame-retardant through combination with the epoxy monomer or with a known amine or anhdyride hardener used for curing the resin.

The present invention seeks to provide a flame-retardant composition which may be built into the polymer which is to be rendered flame-retardant, and which composition has an even greater efficiency than those known hitherto. Moreover, said composition should have no appreciable detrimental effect on either the stability of the - to be rendered flame-retardant - polymer or on any of its other properties.

Accordingly, the present invention provides a flame-retardant composition useful in rendering polymers flame-retardant by copolymerizing with the starting monomers, which composition comprises a halogenated, phosphorus-containing polyester, obtainable by reacting a phosphine-oxide containing at least two hydroxyalkyl groups (A) with a halogenated polycarboxylic compound (B) in such a ratio as to provide two or more hydroxyl groups in the resulting polyester, optionally followed by the reaction thereof with a multifunctional organic compound (C), which compound (C) is reactive towards the hydroxyl groups of said halogenated, phosphoruscontaining polyester.

The prefix "poly" is used herein in respect of hydroxy and carboxylic groups to denote "two or more". An alkyl group is a straight chain or branched chain group suitably having up to 10 carbon atoms. Halogen is fluorine, chlorine, bromine or iodine.

The flame-retardant composition of the invention may suitably be used directly in the form of the reaction product of the compounds (A) and (B), and optionally, (C); as such it will usually contain more than one product. It is within the gist of the invention to separate and purify the individual reaction products having flame retardant properties, and to use the latter as flame-retardants.

Compound (A) is a phosphine-oxide containing at least two hydroxyalkyl groups. As such, preference is given to phosphine-oxides disclosed in US Patent Specification No. 4,343,914, i.e., phosphine-oxides having the formula (HO-CH₂CR'HCH₂)₂P(=O)R, wherein both radicals R' may be the same or different radicals selected from the group consisting of hydrogen atoms and methyl radicals, and R is an alkyl radical of having from 2 to 8 carbon atoms. In addition, alkoxylation products (i.e. upon reaction with ethylene oxide, propylene oxide and/or other alkylene oxides) may also be used. The most preferred compound (A) is the phosphine-oxide having the formula (HO-CH₂CR'HCH₂)₂P(=O)R, wherein each R' is a hydrogen atom, and R is an alkyl radical having 4 carbon atoms, e.g., isobutyl-bis(3-hydroxylpropyl)phosphine-oxide.

The halogenated, polycarboxylic compound (B) may be an aromatic, aliphatic, or olefinic compound bearing at least one halogen atom, preferably chlorine or bromine (fluorine-, or iodine-substituted compounds are considered less suitable), and bearing at least two carboxylic acid groups or derivatives thereof (eg., carboxylate; acid chloride; ester; or anhydride). Compound (B) suitably is a halogenated, aromatic compound containing an anhydride group; most suitably the compound is a substituted benzene. Preferably, compound (B) is a chlorinated or brominated phthalic anhydride; tetrabromophthalic anhydride being most preferred.

The flame-retardant composition may be prepared using conditions well known from esterification reactions described in the art. However, to prevent the preparation of a very viscous (or even an insoluble solid) composition, preference is given to reaction schemes whereby the halogenated, polycarboxylic compound (B) is added to suitably an excess of the compound (A). A suitable reaction scheme (although leading to a different type of flame-retardant, i.e. suitable for application on instead of application in a polymer) is found in US Patent Specification No. 4,178,399.

The ratio of halogenated, polycarboxylic compound (B) versus polyhydroxyphosphonic compound (A) depends on the functionality of both said compounds. Thus, when employing for instance tetrabromophthalic anhydride (TBPA) and isobutyl-bis(3-hydroxylpropyl) phosphine-oxide (available from FMC Corporation under the designation FR-D), i.e., the most preferred embodiment leading to tetrabromophthalic-acid-bis(isobutyl-3-hydroxypropylphosphine-oxide) propyl ester (TBPDPE), the molar (and equivalent) amount of said phosphine oxide is preferably twice that of the anhydride.

Conveniently, the reaction is carried out in the presence of a hygroscopic material, for example anhydrous sodium acetate.

The reaction of compound (A) with compound (B) is suitably carried out at elevated temperature, preferably at a temperature in the range of from 100 to 200°C. The reaction time is conveniently from 2 to 3 hours using a temperature regime starting at, for example, 120°C and rising to 170 to 180°C for the bulk of the reaction period.

The so-obtained halogenated, phosphorus-containing polyester may be further modified by reaction with a multifunctional organic compound (C), which compound (C) is reactive towards the hydroxyl groups of said halogenated, phosphorus-containing polyester. Thus, a wide range of copolymerizable flame-retardant compositions can be obtained.

Suitably, said compound (C) is an alkylene oxide having from 2 to 4 carbon atoms, modifying the polyester by mild alkoxylation (yielding again a hydroxyl-terminated polyester, however with a different reactivity and/or viscosity), a polyisocyanate suitably as a conventional diisocyanate, for example methylene diphenyl diisocyanate or toluene diisocyanate, (yielding an isocyanate-terminated flame-retarding polyester), or an (alkyl)acrylic acid or derivative thereof (yielding a flame-retarding polyester containing terminal ethylenic unsaturation). However, it is appreciated that other possibilities (to adapt the flame-retarding polyester to a specific polymerisation process) may be followed without departing from the gist of the invention.

It is noted that for certain applications the viscosity may be still too high. Then, the flame-retardant composition may be diluted with a reactive, and/or a non-reactive viscosity-lowering diluent. The diluent may be, for example another flame retardant. For instance, suitably in the use of a hydroxy-functional, flame-retardant composition in preparing a polyurethane foam, the composition may be diluted with a glycol derivative, or other hydroxy-functional diluents, but also alternatively with an alkyl or haloalkyl phosphonate or phosphate, suitably a C₁₋₆ alkyl or halo C₁₋₆ alkyl phosphonate or phosphate, preferably dimethylmethylphosphonate, trichloropropylphosphonate, or - and preferred - with triethylphosphate.

In use the flame retardant composition of the invention is added to the polymer starting materials prior to polymerisation. In the case of polyurethane preparation, the polyester composition is suitably preblended with the starting polyol. The present invention extends to a polyol composition which incorporates a flame retardant composition of the present invention. The amount of flame retardant composition of the invention used may be, for example, in the range of from 10 to 60 parts per hundred parts by weight of polyol, suitably from 10 to 40, most suitably from 10 to 30. If a diluent is also used, suitably it is incorporated into the flame retardant composition in a ratio in the range of from 1:4 to 1:8 by weight, preferably in a weight ratio of 1:4.

The invention is illustrated by the examples below. From said examples it may be seen that foams thus prepared, compare favourably (less flame-retardant is required to obtain the same effect) with foams prepared using conventional flame-retardants. It will be appreciated that said examples should not be construed to form a limitation of the scope of the invention.

In the examples below, the notation "pbw" means parts by weight, and the following compounds (trademarks marked with an *) have been used:-
- FR-D: isobutyl-bis(3-hydroxypropyl)phosphine-oxide, sold by the FMC Corporation
- PHT 4: tetrabromophthalic anhydride (TBPA), sold by Great Lakes Chemicals
- BR E 5100: 30/70 TCPP/tetrabromophthalate diol, sold by Great Lakes Chemicals
- DMMP: dimethylmethylphosphonate, sold by Ciba-Geigy
- TCPP: trichloropropylphosphonate, sold by Tenneco Organics Ltd.
- TEP: triethylphosphate, sold by Aldrich Chemicals
- IXOL* B 251: a flame-retardant, sold by Solvay
- FOX-O-POL* VD 280S: a flame-retardant, sold by Resina
- CARADOL* 585-8 (C585-8): a laminating-type polyol, sold by Shell
- CARADOL* MD 944 (MD944): a laminating-type polyol, sold by Shell
- CARADOL* MD 946 (MD946): a laminating-type polyol, sold by Shell
- CARADATE* 30 (MDI): polymeric diphenylmethane diisocyanate, sold by BSI
- DABCO* DC-193: silicon oil, sold by Air Products
- DIME*-6: dimethylcyclohexylamine, sold by BASF
- TCFM-11: fluorotrichloromethane, sold by Hoechst
- NaAc: anhydrous sodium acetate (purity > 99%), sold by Merck
- MethylPROXITOL*: a glycol ether, sold by Shell

### Preparation of tetrabromophthalic acid-bis(isobutyl-3-hydroxypropylphosphine-oxide) propyl ester (TBPDPE)

Two moles (446 pbw) of FR-D were placed in a two litre glass reactor and heated under stirring to 130°C. During all the operation the mixture was flushed with a strong nitrogen stream in order to free it from atmospheric oxygen and to remove the water created during the reaction. At 130°C the required amount of TBPA (one mole, 464 pbw) was added, and the temperature decreased to 120°C. NaAc (1 pbw) was added at 130°C and the mixture was heated to 170 - 175°C over a period of approximately one hour and maintained at this temperature for a further period of 1.5 hours. After this time, the acid value was found to be 2 mg KOH/g or less. The product was used without purification or isolation of the TBPDPE.

### Preparation of tetrachlorophthalic acid-bis(isobutyl-3-hydroxypropylphosphine-oxide) propyl ester (TCPDPE)

The above procedure was repeated, however, now using tetrachlorophthalic anhydride instead of TBPA.

### Foam preparation

Foam samples were made in an open polyethylene bag of dimensions 170 mm x 430 mm. The reactivity targets were set on a fibre time of 45 +/- 5 seconds. The foams were prepared by (a) preblending the polyol, foam additives, silicone oil, water, flame-retardant, and TCFM-11; (b) mixing (2500 to 3000 rpm) the blend of step (a), while (c) adjusting for TCFM-11 loss; (d) adding the catalyst to the blend of step (c), while stirring for 5 seconds (2500 to 3000 rpm); (e) quickly adding the organic isocyanate (CARADATE 30) to the blend of step (d); (f) stirring the mixture for a further 10 seconds; and (g) pouring the mixture into the bag.

Preparation details, and some properties of the reaction batches made are presented in the Tables. The amounts of the components utilised are given in parts per hundred parts by weight of polyol.

### Results

Table 1 discloses 10 examples, of which numbers 1, 4, and 7 are comparative examples. From Table 1 it can be seen that the present flame-retardant composition enhances the fire-retardance of the polymer, without detrimentally influencing other process parameters. Moreover, it can be seen that there is a substantial advantage to be gained when using a diluent (possibly even a synergistic effect). Tables 2 and 3 show the advantageous use of TBPDPE diluted by an amount of 20 % (wt/wt) of TEP in both partly and fully water-blown systems when compared with commercial reactive flame-retardants. From the tables it can be clearly derived that said commercially available products are less effective and that more is required to obtain the same efficiency as compared to the use of the present flame-retardant. Table 4 discloses the (slightly greater) efficiency of the brominated, flame-retardant composition over the chlorinated, flame-retardant composition.

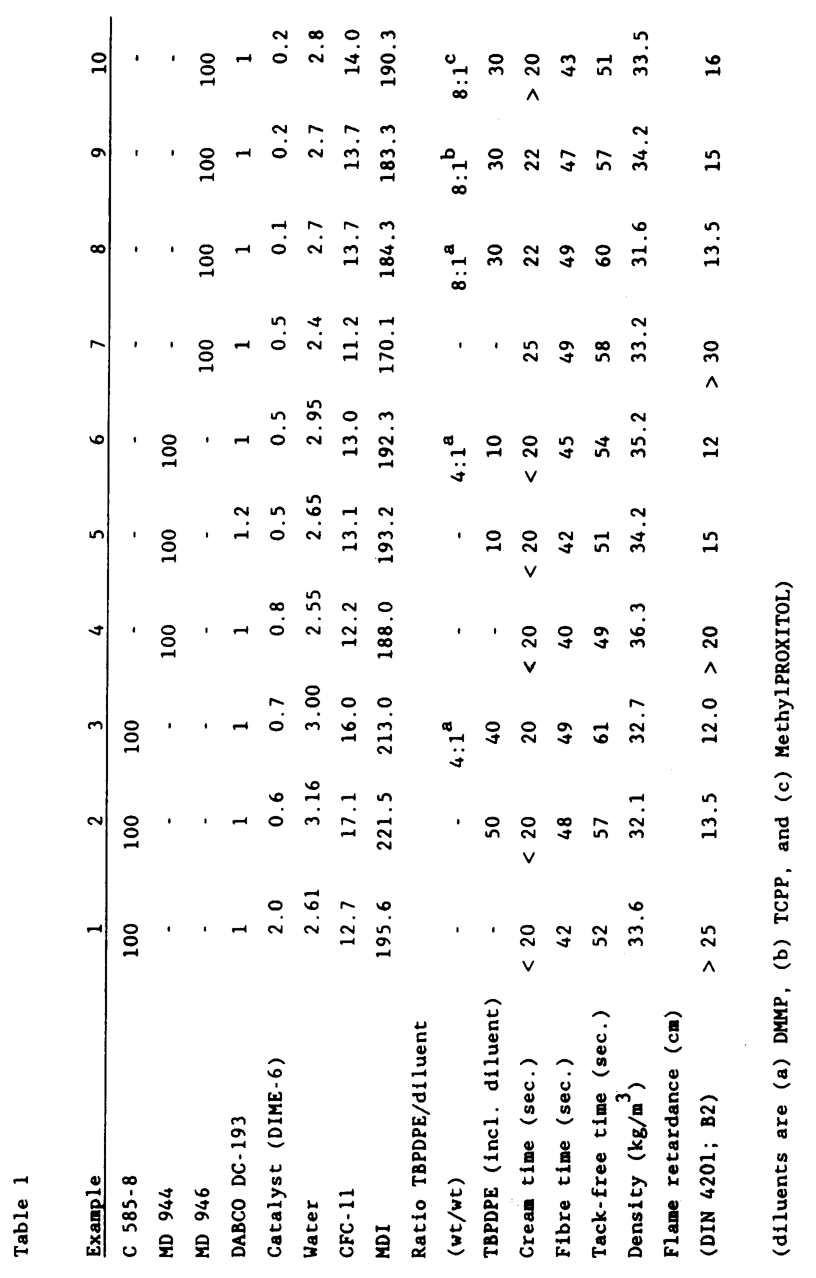

**Table 2**

| Example | 11 | 12 | 13 | 14 | 15 | 16 |
|---|---|---|---|---|---|---|
| C 585-8 | 100 | 100 | 100 | 100 | 100 | 100 |
| DABCO DC-193 | 1 | 1 | 1 | 1 | 1 | 1 |
| Catalyst (DIME-6) | 1.8 | 1.2 | 0.9 | 0.8 | 0.6 | 0.7 |
| Water | 2.6 | 3.7 | 2.9 | 4.2 | 6.5 | 4.8 |
| CFC-11 | 12.8 | 21.7 | 15.1 | 0 | 0 | 0 |
| MDI | 195.6 | 291.1 | 206.7 | 221.5 | 336 | 239.8 |
| TBPDPE/TEP 4:1 (wt/wt) | - | - | 30 | - | - | 30 |
| FR-D | - | 60 | - | - | 60 | - |
| Cream time (sec.) | < 20 | 23 | 22 | 24 | 24 | 22 |
| Fibre time (sec.) | 45 | 45 | 53 | 48 | 48 | 51 |
| Tack-free time (sec.) | 54 | 47 | 65 | 63 | 57 | 62 |
| Density (kg/m³) | 33.6 | 34.0 | 33.4 | 33.3 | 31.9 | 32.9 |
| Flame retardance (cm) (DIN 4201; B2) | > 25 | 13 | 13.0 | > 25 | 14.5 | 13 |

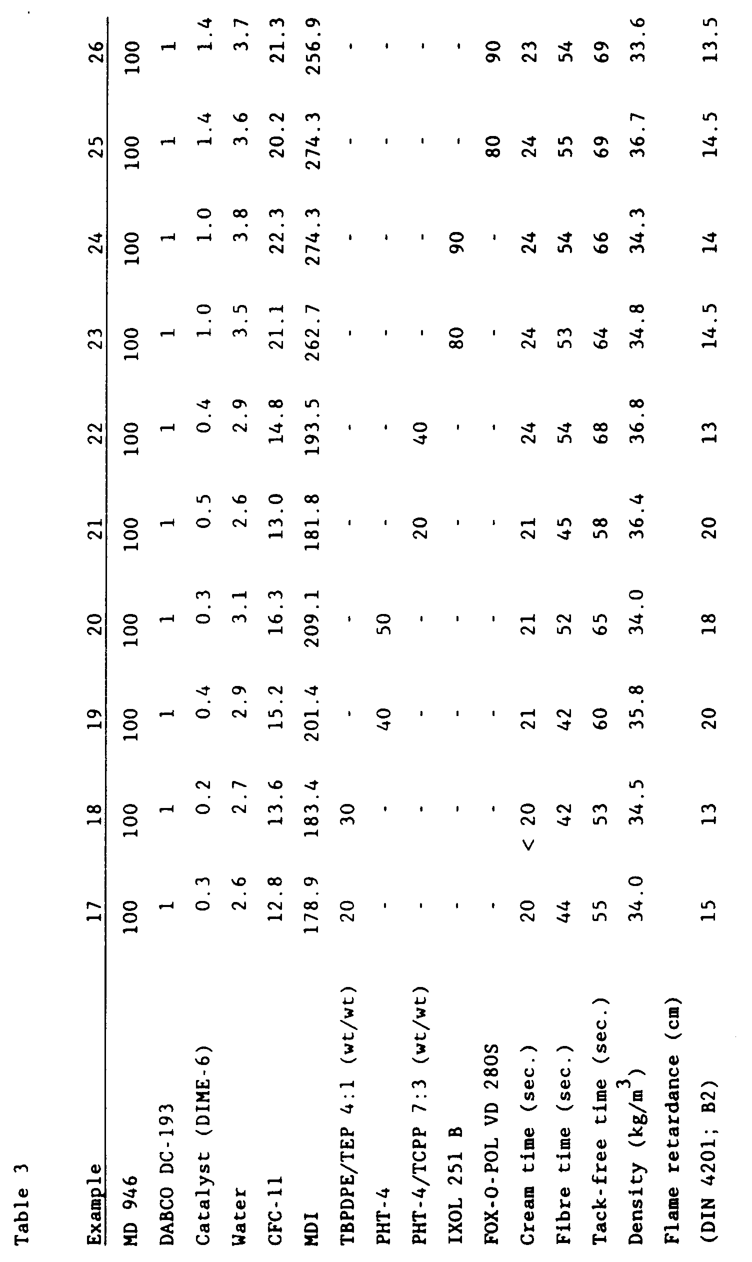

**Table 4**

| Example | 27 | 28 | 29 | 30 | 31 | 32 |
|---|---|---|---|---|---|---|
| MD 946 | 100 | 100 | 100 | 100 | 100 | 100 |
| DABCO DC-193 | 1 | 1 | 1 | 1 | 1 | 1 |
| Catalyst (DIME-6) | 0.3 | 0.2 | 0.3 | 0.3 | - | 0.1 |
| Water | 2.6 | 2.7 | 2.6 | 2.7 | 4.5 | 4.5 |
| CFC-11 | 12.8 | 13.6 | 12.9 | 13.7 | 0 | 0 |
| MDI | 175.3 | 178.9 | 180.3 | 185.3 | 214.0 | 213.7 |
| TBPDPE/TEP 4:1 (wt/wt) | 20 | 30 | - | - | 30 | - |
| TCPDPE/TEP 4:1 (wt/wt) | - | - | 20 | 30 | - | 30 |
| Cream time (sec.) | 20 | < 20 | 20 | 18 | < 20 | 18 |
| Fibre time (sec.) | 44 | 42 | 45 | 41 | 40 | 36 |
| Tack-free time (sec.) | 55 | 53 | 60 | 53 | 48 | 42 |
| Density (kg/m³) | 34.0 | 34.5 | 34.5 | 34.0 | 34.9 | 33.1 |
| Flame retardance (cm) (DIN 4201; B2) | 15 | 13 | 16 | 14 | 13 | 17 |

## Claims

1. A flame-retardant composition useful in rendering polymers flame-retardant by copolymerizing with the starting monomers, which composition comprises a halogenated, phosphorus-containing polyester obtainable by reacting a phosphine-oxide containing at least two hydroxyalkyl groups (A) with a halogenated polycarboxylic compound (B) in such a ratio as to provide two or more hydroxyl groups in the resulting polyester, optionally followed by the reaction thereof with a multifunctional organic compound (C), which compound (C) is reactive towards the hydroxyl groups of said halogenated, phosphorus-containing polyester.

2. A flame-retardant composition as claimed in claim 1, wherein (A) is a phosphine-oxide containing at least two 3-hydroxypropyl groups having the formula (HO-CH₂CR'HCH₂)₂P(=O)R, wherein R' may be the same or different radicals selected from the group consisting of hydrogen atoms and methyl radicals, and R is an alkyl radical of from 2 to 8 carbon atoms.

3. A flame-retardant composition as claimed in claim 1 or claim 2, wherein (B) is a halogenated, aromatic compound containing an anhydride group.

4. A flame retardant composition as claimed in any one of claims 1 to 3, which also contains a viscosity-lowering diluent.

5. A flame retardant composition as claimed in claim 4, in which the diluent is selected from glycol derivatives, alkyl phosphonates, haloalkyl phosphonates, alkyl phosphates and haloalkylphosphates.

6. A flame-retardant composition as claimed in any one of claims 2, 3, and 5, wherein (A) is a phosphine-oxide containing at least two 3-hydroxypropyl groups having the formula (HO-CH₂CR'HCH₂)₂P(=O)R, wherein R' is a hydrogen atom, and R is an alkyl radical of 4 carbon atoms and (B) is tetrabromophthalic anhydride, and which also contains triethylphosphate.

7. A flame-retardant composition as claimed in any one of claims 1 to 6, wherein (C) is an alkylene oxide containing 2 to 4 carbon atoms, an optionally alkyl-substituted acrylic acid or a derivative thereof, or an organic diisocyanate.

8. A process for the preparation of a flame retardant composition as claimed in claim 1, which comprises reacting a phosphine-oxide containing at least two hydroxyalkyl groups (A) with a halogenated polycarboxylic compound (B) in such a ratio as to provide two or more hydroxyl groups in the resulting polyester, optionally followed by reaction with a multifunctional organic compound (C) as specified in claim 1.

9. A polymer composition rendered flame-retardant by having added an effective amount of a flame-retardant composition as claimed in any one of claims 1 to 7, to the reaction mixture at the time that the polymer is prepared.

10. The composition of claim 9, wherein said polymer composition is a polyurethane composition.

11. The composition of claim 10, wherein said polyurethane composition is a water-blown and/or rigid polyurethane foam.

12. Polymer articles containing polymer compositions as claimed in any one of claims 9 to 11.

13. A polyol composition for use in the preparation of a polyurethane according to claim 10 or claim 11, which incorporates a flame retardant composition as claimed in any one of claims 1 to 7.

14. Tetrabromophthalic acid-bis(isobutyl-3-hydroxy-propylphosphine-oxide) propyl ester or its chloro analogue, tetrachlorophthalic acid-bis(isobutyl-3-hydroxypropylphosphine-oxide) propyl ester.

## Patentansprüche

1. Flammhemmende Zusammensetzung, die zum Flammhemmendmachen von Polymeren durch Copolymerisieren mit den Ausgangsmonomeren geeignet ist, welche Zusammensetzung einen halogenierten, phosphorhältigen Polyester enthält, der durch Umsetzen eines wenigstens zwei Hydroxyalkylgruppen enthaltenden Phosphinoxids (A) mit einer halogenierten Polycarbonsäureverbindung (B) in einem solchen Verhältnis, daß zwei oder mehr Hydroxylgruppen in dem resultierenden Polyester gebildet werden, gegebenenfalls mit anschließender Umsetzung des Polyesters mit einer multifunktionellen organischen Verbindung (C), erhältlich ist, welche Verbindung (C) mit den Hydroxylgruppen des halogenierten, phosphorhältigen Polyesters reaktionsfähig ist.

2. Flammhemmende Zusammensetzung nach Anspruch 1, worin (A) ein Phosphinoxid ist, das wenigstens zwei 3-Hydroxypropyl-gruppen enthält, mit der Formel (HO-CH₂CR'HCH₂)₂P(=O)R, worin R' gleiche oder verschiedene Reste, ausgewählt aus der aus Wasserstoffatomen und Methylresten bestehenden Gruppe, sein können und R einen Alkylrest mit 2 bis 8 Kohlenstoffatomen darstellt.

3. Flammhemmende Zusammensetzung nach Anspruch 1 oder 2, worin (B) eine halogenierte aromatische Verbindung mit einem Gehalt an einer Anhydridgruppe ist.

4. Flammhemmende Zusammensetzung nach einem der Ansprüche 1 bis 3, die auch ein viskositätserniedrigendes Verdünnungsmittel enthält.

5. Flammhemmende Zusammensetzung nach Anspruch 4, worin das Verdünnungsmittel unter Glycolderivaten, Alkylphosphonaten, Halogenalkylphosphonaten, Alkylphosphaten und Halogenalkylphosphaten ausgewählt ist.

6. Flammhemmende Zusammensetzung nach einem der Ansprüche 2, 3 und 5, worin (A) ein Phosphinoxid mit einem Gehalt an wenigstens zwei 3-Hydroxypropylgruppen ist, mit der Formel (HO-CH₂CR'HCH₂)₂P(=O)R, worin R' ein Wasserstoffatom bedeutet und R für einen Alkylrest mit 4 Kohlenstoffatomen steht und worin (B) Tetrabromphthalsäureanhydrid ist und die auch Triethylphosphat enthält.

7. Flammhemmende Zusammensetzung nach einem der Ansprüche 1 bis 6, worin (C) ein Alkylenoxid mit 2 bis 4 Kohlenstoffatomen, eine gegebenenfalls alkylsubstituierte Acrylsäure oder ein Derivat hievon oder ein organisches Diisocyanat ist.

8. Verfahren zur Herstellung einer flammhemmenden Zusammensetzung nach Anspruch 1, welches ein Umsetzen eines wenigstens zwei Hydroxyalkylgruppen enthaltenden Phosphinoxids (A) mit einer halogenierten Polycarbonsäureverbindung (B) in einem solchen Verhältnis, daß in dem gebildeten Polyester zwei oder mehr Hydroxylgruppen geschaffen werden, und gegebenenfalls eine anschließende Umsetzung mit einer multifunktionellen organischen Verbindung (C), wie in Anspruch 1 spezifiziert, umfaßt.

9. Polymerzusammensetzung, die durch Zusetzen einer wirksamen Menge einer flammhemmenden Zusammensetzung nach einem der Ansprüche 1 bis 7 zum Reaktionsgemisch zum Zeitpunkt der Polymerherstellung flammhemmend gemacht worden ist.

10. Zusammensetzung nach Anspruch 9, worin die Polymerzusammensetzung eine Polyurethanzusammensetzung ist.

11. Zusammensetzung nach Anspruch 10, worin die Polyurethanzusammensetzung ein wassergeblasener und/oder starrer Polyurethanschaum ist.

12. Polymergegenstände mit einem Gehalt an Polymerzusammensetzungen nach einen der Ansprüche 9 bis 11.

13. Polyolzusammensetzung zur Anwendung in der Herstellung eines Polyurethans nach Anspruch 10 oder 11, die eine flammhemmende Zusammensetzung nach einem der Ansprüche 1 bis 7 enthält.

14. Tetrabromphthalsäure-bis(isobutyl-3-hydroxypropylphosphinoxid)propylester oder sein Chloranalogon, Tetrachlorphthalsäure-bis (isobutyl-3-hydroxypropylphosphinoxid)-propylester.

## Revendications

1. Composition retardatrice de flamme destinée à rendre des polymères retardateurs de flamme par copolymérisation avec les monomères de départ, laquelle composition comprend un polyester contenant du phosphore, halogéné, obtenable par la réaction d'un oxyde de phosphine contenant au moins deux groupe hydroxyalkyle (A) avec un composé polycarboxylique halogéné (B) dans un rapport permettant d'apporter deux ou plus de deux groupes hydroxyle dans le polyester résultant, éventuellement suivie par la réaction de celui-ci avec un composé organique multifonctionnel (C), lequel composé (C) est réactif vis-à-vis des groupes hydroxyle de ce polyester contenant du phosphore, halogéné.

2. Composition retardatrice de flamme suivant la revendication 1, dans laquelle (A) est un oxyde de phosphine contenant au moins deux groupes 3-hydroxypropyle ayant la formule (HO-CH₂CR'HCH₂)₂P(=O)R, dans laquelle les R' peuvent être des radicaux identiques ou différents choisis dans le groupe comprenant les atomes d'hydrogène et les radicaux méthyle, et R est un radical alkyle de 2 à 8 atomes de carbone.

3. Composition retardatrice de flamme suivant l'une et l'autre des revendications 1 et 2, dans laquelle (B) est un composé aromatique, halogéné contenant un groupe anhydride.

4. Composition retardatrice de flamme suivant l'une quelconque des revendications 1 à 3, qui contient également un diluant abaissant la viscosité.

5. Composition retardatrice de flamme suivant la revendication 4, dans laquelle le diluant est choisi parmi les dérivés de glycol, les phosphonates d'alkyle, les phosphonates d'haloalkyle, les phosphates d'alkyle et les phosphates d'haloalkyle.

6. Composition retardatrice de flamme suivant l'une quelconque des revendications 2, 3 et 5, dans laquelle (A) est un oxyde de phosphine contenant au moins deux groupes 3-hydroxypropyle ayant la formule (HO-CH₂CR'HCH₂)₂P(=O)R, dans laquelle R' est un atome d'hydrogène et R est un radical alkyle de 4 atomes de carbone et (B) est de l'anhydride tétrabromophtalique, et qui contient également du triéthylphosphate.

7. Composition retardatrice de flamme suivant l'une quelconque des revendications 1 à 6, dans laquelle (C) est un oxyde d'alkylène contenant 2 à 4 atomes de carbone, un acide acrylique éventuellement alkyl-substitué ou un dérivé de celui-ci, ou un diisocyanate organique.

8. Procédé de préparation d'une composition retardatrice de flamme suivant la revendication 1, qui comprend la réaction d'un oxyde de phosphine contenant au moins deux groupes hydroxyalkyle (A) avec un composé polycarboxylique halogéné (B) dans un rapport permettant d'amener deux groupes hydroxyle ou plus dans le polyester résultant, éventuellement suivie de la réaction avec un composé organique multifonctionnel (C) tel que spécifié à la revendication 1.

9. Composition de polymére rendue retardatrice de flamme par l'addition d'une quantité efficace d'une composition retardatrice de flamme suivant l'une quelconque des revendications 1 à 7, au mélange réactionnel au moment de la préparation du polymére.

10. Composition suivant la revendication 9, dans laquelle ladite composition de polymère est une composition de polyuréthanne.

11. Composition suivant la revendication 10, dans laquelle la composition de polyuréthanne est une mousse de polyuréthanne soufflée à l'eau et/ou rigide.

12. Articles de polymère contenant des compositions de polymère suivant l'une quelconque des revendications 9 à 11.

13. Composition de polyol utilisable dans la préparation d'un polyuréthanne suivant l'une et l'autre des revendications 10 et 11, qui incorpore une composition retardatrice de flamme suivant l'une quelconque des revendications 1 à 7.

14. Ester propylique d'acide tétrabromophtalique-bis(isobutyl-3-hydroxypropylphosphine-oxyde) ou son analogue chloré, l'ester propylique d'acide tétrachlorophtalique-bis(isobutyl-3-hydroxypropylphosphine-oxyde).
